# EUROPÄISCHE PATENTSCHRIFT

(11) **EP 0 763 262 B1**
(45) Veröffentlichungstag und Bekanntmachung des Hinweises auf die Patenterteilung: **17.06.1998**
(21) Anmeldenummer: 96908132.2
(22) Anmeldetag: 25.03.1996
(51) Int. Cl.: H01M 2/36

(54) **FÜLLVORRICHTUNG FÜR BATTERIEZELLEN MIT EINEM SCHWIMMER-BETÄTIGTEN VENTIL**
FILLING DEVICE FOR BATTERY CELLS WITH A FLOAT-OPERATED VALVE
DISPOSITIF DE REMPLISSAGE POUR ELEMENTS DE BATTERIE COMPORTANT UNE VANNE A FLOTTEUR

(30) Priorität: 30.03.1995 DE 19511803
(43) Veröffentlichungstag der Anmeldung: 19.03.1997
(73) Patentinhaber: Oschmann, Anna, 85230 Bergkirchen (DE); Oschmann, Berta, 85230 Bergkirchen (DE); Oschmann, Elke, 85230 Bergkirchen (DE)
(72) Erfinder: OSCHMANN, Elke, D-85230 Bergkirchen (DE)
(74) Vertreter: Gustorf, Gerhard, Dipl.-Ing.
(86) Internationale Anmeldenummer: EP9601300
(87) Internationale Veröffentlichungsnummer: WO9630956

(56) Entgegenhaltungen:
- EP-A- 0 207 346
- EP-A- 0 234 278
- WO-A-86/03061
- WO-A-91/17577
- FR-A- 1 570 749
- PATENT ABSTRACTS OF JAPAN vol. 013, no. 166 (E-746), 20.April 1989 & JP,A,64 000644 (SHIN KOBE ELECTRIC MACH CO LTD), 5.Januar 1989,

## Beschreibung

Die Erfindung betrifft eine Vorrichtung zum automatischen Einfüllen von Wasser in Batteriezellen mit einem in die Zelle einsetzbaren Füllstopfen, der einen Anschlußstutzen für die Wasserzufuhr sowie ein von einem Schwimmer betätigtes Ventil aufweist, dessen Ventilkörper über einen schwenkbar gelagerten Hebel mit dem zentrisch im Stopfengehäuse angeordneten Schwimmer gelenkig verbunden ist.

Eine derartige Vorrichtung ist Gegenstand der DE-C 31 27 619. Bei dieser bekannten Füllvorrichtung werden die Bewegungen des Schwimmers über einen Verstärkungshebel auf eine Welle mit prismatischem Querschnitt übertragen, die bei ihrer Drehung einen im wesentlichen liegend angeordneten Ventilkörper betätigt und diesen bei erreichter Füllhöhe in die Schließstellung bringt. Das zugeführte Wasser läuft durch eine zentrische Öffnung im Boden des Stopfengehäuses in die Batteriezelle und sorgt dabei für eine ausreichende Schmierung der Schwimmerstange.

Der Erfindung liegt die Aufgabe zugrunde, eine weiter verbesserte Füllvorrichtung für Batteriezellen zur Verfügung zu stellen, die aus möglichst wenigen Einzelteilen zusammengesetzt und daher leicht montierbar ist, wobei gleichzeitig durch eine einfache Maßnahme dafür gesorgt wird, daß die mit den Anschlußstutzen verbundenen Zuleitungen in aller Regel immer gefüllt sind, um dadurch eine Sicherheit gegen Wasserstoffexplosionen und die gefürchteten Durchzündungen zu mehreren, hintereinandergeschalteten Stopfen verhindern.

Bei einer Vorrichtung der eingangs umrissenen Bauart wird diese Aufgabe erfindungsgemäß dadurch gelöst, daß zwischen dem Ventil mit hängendem Ventilkörper und dem Anschlußstutzen eine im wesentlichen vertikale Überlaufwand angeordnet ist, deren freie Oberkante höher liegt als die horizontale Bohrungsoberkante des Anschlußstutzens, von dem ein U-förmiger Zulaufkanal zu der Überlaufwand führt.

Durch die gegenüber bisher bekannten Füllvorrichtung sehr hohe Überlaufwand wird eine Abschottung gebildet, so daß in dem U-förmigen Zulaufkanal das Wasser immer bis zur Bohrungsoberkante des Anschlußstutzens steht, wodurch eine Siphonwirkung erzeugt wird, die das gefürchtete Durchzünden von Wasserstoffexplosionen wirksam verhindert. Aufgrund der hängenden Anordnung des Ventilkörpers ist nach oben hin sehr viel Platz vorhanden, so daß die Überlaufwand sehr weit nach oben gezogen werden kann.

In Weiterbildung der Erfindung wird der vom Anschlußstutzen ausgehende, vertikale U-Schenkel durch einen an seiner Unterseite geschlossenen Zylinder gebildet, von dem ein seitlicher Verbindungskanal in ein dazu paralleles Zylindergehäuse mündet, in dessen oberem Bereich die Überlaufwand ausgebildet ist. Die weitere Wasserführung erfolgt dann in der Weise, daß von dem oberen Bereich des Zylindergehäuses seitlich ein Zulaufkanal in einen zum Zylindergehäuse parallelen Ventilzylinder führt, in dem der Ventilsitz für den hängenden Ventilkörper ausgebildet ist. An den U-förmigen Zulaufkanal schließt sich in dieser Weise ein weiterführender Kanal in Form eines kopfstehenden U an.

In den Boden des Ventilzylinders sind Zulauföffnungen eingearbeitet, die seitlich neben dem Schwimmer in die Batteriezelle führen. Dies hat den Vorteil, daß das zulaufende Wasser nicht von oben auf den Schwimmer prallt, sondern seitlich in die Batteriezelle fließt, so daß die Schwimmerbewegungen zum Schließen des Ventils nicht beeinträchtigt werden.

Nach einem weiteren Merkmal der Erfindung ist das nach unten weisende Ende des Ventilkörperschaftes mit der zentrischen Schwimmerstange über einen Verstärkungshebel gelenkig verbunden, der auf einer Kippstütze schwenkbar gelagert ist.

Dabei ist es besonders günstig, wenn die Kippstütze und die Zulauföffnungen an einer im wesentlichen kreisförmigen Bodenplatte ausgebildet sind, die über ein Scharniergelenk einstückig mit dem Zylindergehäuse verbunden ist, das mit dem Ventilzylinder und dem den Zulaufkanal aufnehmenden Zylinder als einstückiges Spritzguß-Innengehäuse ausgebildet ist. Dieses Spritzgußgehäuse läßt sich in einer einzigen Form leicht herstellen und montieren, wobei die Bodenplatte gegen die Unterseite des Innengehäuses geklappt wird und dieses dadurch nach unten abschließt. Da die Kanäle für den Wasserzulauf mit dem Innengehäuse mitgespritzt sind, erübrigen sich Maßnahmen zum nachträglichen Verschließen der Kanäle an Öffnungen, aus denen Formkerne herausgezogen werden müssen.

Es ist besonders günstig, wenn das längere Ende des Verstärkungshebels gelenkig mit einem von der Schwimmerstange waagrecht abstehenden Arm verbunden ist, von dessen freiem Ende eine vertikale Stange nach oben absteht, die eine Anzeigescheibe trägt, der bei geschlossenem Ventil durch ein Fenster in einem Deckel im Stopfengehäuse sichtbar ist. Mit diesen Maßnahmen wird die vertikale Schwimmerbewegung einerseits - über den Verstärkungshebel - auf den Ventilkörper und andererseits unmittelbar auf die Anzeigescheibe übertragen, die eine Sichtkontrolle über den Schließzustand des Ventils erlaubt.

Nach einer besonders vorteilhaften Weiterbildung der Erfindung ist die Schwimmerstange hohl ausgebildet und greift mit ihrem oberen Ende in einen oben geschlossenen Führungszylinder ein, der in dem zentrischen Zylindergehäuse ausgebildet ist und von dessen Decke ein Führungszapfen nach unten absteht, der in das obere Ende der hohlen Schwimmerstange eingreift. Dabei ist es günstig, wenn der Führungszapfen einen kreuzförmigen Querschnitt hat derart, daß an seinen Längsseiten vertikale Ablaufschlitze ausgebildet sind. Das untere Ende der Schwimmerstange kann mit Schnappsitz in den Schwimmer eingesetzt werden und weist über diesem eine seitliche Ablauföffnung auf.

Die geschilderten Maßnahmen sorgen dafür, daß die Schwimmerstange immer leichtgängig geführt ist und einerseits durch die teleskopartige Führung auf dem Führungszapfen und andererseits durch die Lagerung in dem oben geschlossenen Führungszylinder von Fremdpartikeleinflüssen weitgehend geschützt ist. Es ist nämlich nie zu vermeiden, daß durch den rauhen Betrieb der Batteriezellen am jeweiligen Einsatzort Verschmutzungen und insbesondere ölige Partikel in die Zellen gelangen, die bei bisher bekannten Füllvorrichtungen zu einer Schwergängigkeit der Schwimmerstange führen können. Diese Gefahr ist bei der Erfindung weitgehend ausgeschaltet, da einerseits eventuell vorhandene Schmutzpartikel durch die vertikalen Pumpbewegungen der Schwimmerstange über die vertikalen Ablaufschlitze und die seitlichen Ablauföffnungen aus dem Schwimmerstangenbereich herausgedrückt werden und andererseits die hohle Schwimmerstange immer mit von Partikeln freiem Destillat gefüllt ist, wodurch eine gute Schmierung gewährleistet wird.

Für die Fertigung der Füllvorrichtung ist es von Vorteil, wenn in den den Zulaufkanal aufnehmenden Zylinder ein zum Anschlußstutzen führender, vertikaler Verbindungsstutzen eingreift, der einstückig mit dem Stopfengehäuse ausgebildet ist, von dessen horizontaler Oberseite, an der der Deckel angelenkt ist, in die Batteriezelle einsetzbare, radial federnde Seitenwände nach unten abstehen. Beim Aufsetzen des Stopfengehäuses auf das Spritzguß-Innengehäuse wird dadurch der vom Anschlußstutzen ausgehende, vertikale U-Schenkel des Zulaufkanals vervollständigt, wobei gleichzeitig eine Schnappverbindung zwischen dem Spritzguß-Innengehäuse und den federnden Seitenwänden des Stopfengehäuses erfolgt.

Für eine leichte Montage und Abnahme von Verbindungsschläuchen ist es vorteilhaft, wenn am Stopfengehäuse zwei Anschlußstutzen ausgebildet sind, deren Achsen einen stumpfen Winkel bilden und dadurch deren Zugänglichkeit erleichtern.

Die Erfindung ist nachstehend an einem Ausführungsbeispiel erläutert, das in der Zeichnung dargestellt ist. Es zeigen:
Figur 1 eine in eine Batteriezelle eingesetzte Füllvorrichtung gemäß der Erfindung während des Füllvorgangs,
Figur 2 eine der Figur 1 entsprechende Darstellung der Füllvorrichtung bei geschlossenem Ventil,
Figur 3 eine Seitenansicht der Füllvorrichtung,
Figur 4 eine gegenüber der Figur 3 um 90° gedrehte Seitenansicht,
Figur 5 eine Draufsicht auf die Füllvorrichtung bei geöffnetem Deckel,
Figur 6 eine Explosionsdarstellung des Stopfengehäuses und
Figur 7 eine Explosionsdarstellung des Spritzguß-Innengehäuses mit den darin montierten Elementen.

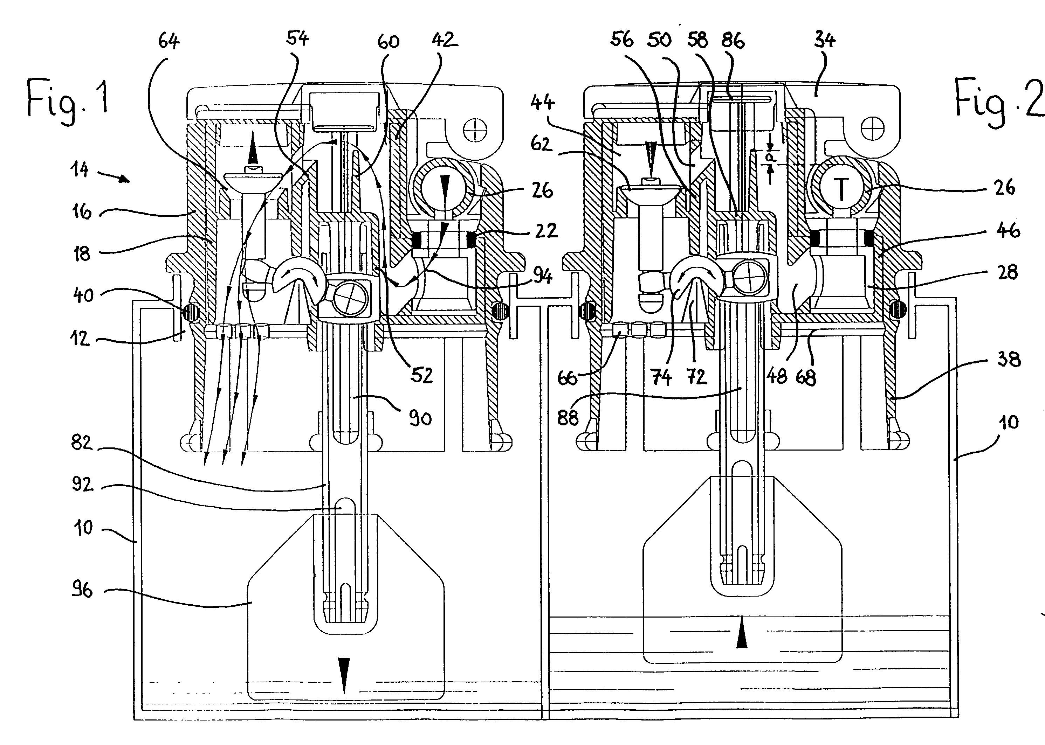

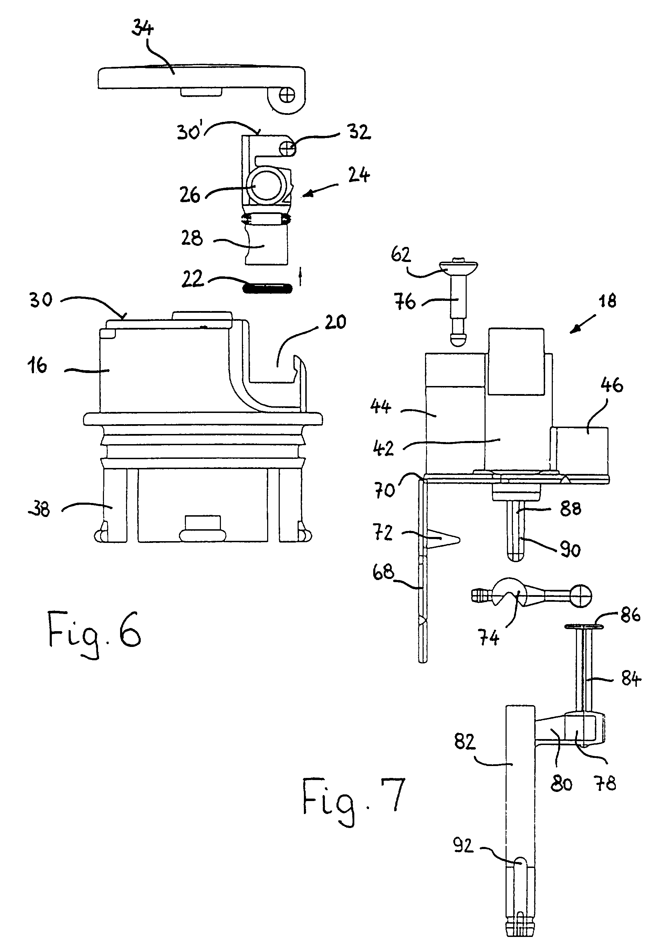

Die Figuren 1 und 2 zeigen zwei nebeneinanderliegende Batteriezellen 10, in deren obere Öffnung 12 jeweils eine gemäß der Erfindung ausgebildete Füllvorrichtung 14 eingesetzt ist. Jede Füllvorrichtung 14 besteht aus einem äußeren, aus Kunststoff hergestellten, zylindrischen Stopfengehäuse 16 (Figur 6) und einem darin eingesetzten Innengehäuse 18 (Figur 7), das im wesentlichen einstückig als Spritzgußteil hergestellt ist.

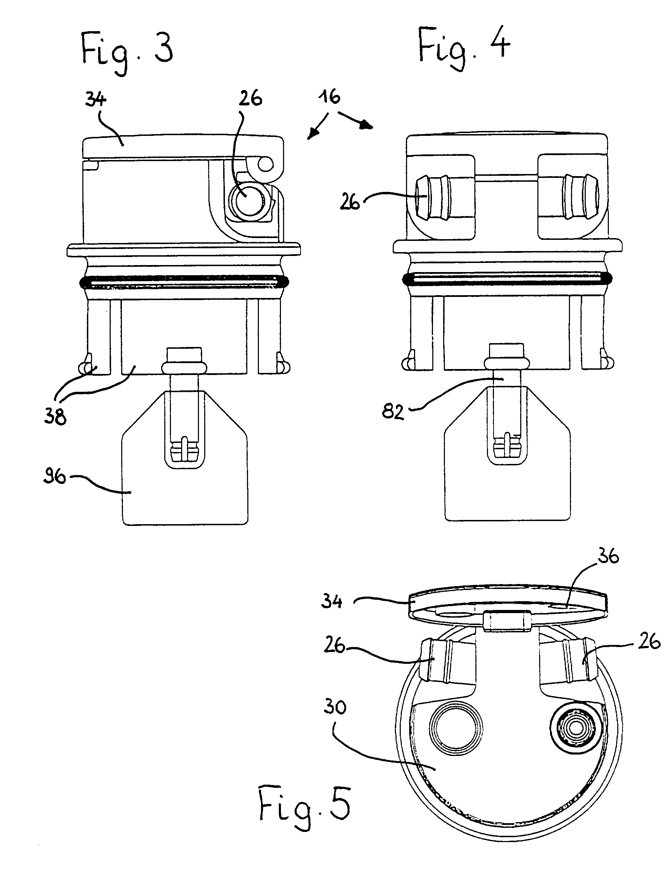

Wie Figur 6 zeigt, ist in einen seitlichen Sitz 20 des Stopfengehäuses 16 unter Zwischenschaltung eines O-Ringes 22 ein T-förmiges Anschlußstück 24 eingesetzt, das aus zwei horizontalen Anschlußstutzen 26 und einem mittig davon nach unten abstehenden Verbindungsstutzen 28 besteht. Figur 5 läßt erkennen, daß die beiden Anschlußstutzen 26 einen stumpfen Winkel miteinander bilden, wodurch der Anschluß von Schlauchleitungen erleichtert wird.

Im montierten Zustand des Stopfengehäuses 16 liegt dessen horizontale Oberseite 30 in derselben Ebene wie die horizontale Oberseite 30' des Anschlußstücks 24. Von dieser stehen nach beiden Seiten zwei Zapfen 32 ab, die als Gelenklager für einen Deckel 34 dienen, in den seitlich ein kreisrundes Fenster 36 eingearbeitet ist.

Von der Oberseite 30 des Stopfengehäuses 16 stehen nach unten radial federnde Seitenwände 38 ab, die unter Zwischenschaltung eines O-Ringes 40 mit Schnappsitz in die Öffnung 12 der jeweiligen Batteriezelle 10 eingesetzt sind.

Zwischen die radial federnden Seitenwände 38 des Stopfengehäuses 16 ist mit Schnappeingriff das Spritzguß-Innengehäuse 18 eingesetzt. Dieses hat ein in der Mitte vertikal angeordnetes Zylindergehäuse 42, an dessen in Figur 7 linke Seitenwand ein dazu paralleler Ventilzylinder 44 einstückig angeformt ist. Auf der gegenüberliegenden Seite ist an dem Zylindergehäuse 42 ein ebenfalls achsparalleler Zylinder 46 angeformt, dessen Unterseite geschlossen und dessen Oberseite geöffnet ist, so daß im montierten Zustand der Füllvorrichtung 14 in diesen Zylinder 46 der nach unten weisende Verbindungsstutzen 28 des Anschlußstücks 24 eingreift.

Von dem Verbindungsstutzen 28 und damit dem Zylinder 46 führt ein seitlicher Verbindungskanal 48 in das zentrische Zylindergehäuse 42, das in seinem oberen Bereich über einen seitlichen Überströmkanal 50 mit dem Ventilzylinder 44 verbunden ist.

Im Zylindergehäuse 42 ist zentrisch ein Führungszylinder 52 ausgebildet, der über einen Steg 54 an der Verbindungswand 56 zwischen dem Zylindergehäuse 42 und dem Ventilzylinder 44 angeformt ist. Der Führungszylinder 52 ist an seiner Oberseite durch eine Decke 58 geschlossen, von der nach oben eine vertikale Überlaufwand 60 absteht. Die freie Kante der Überlaufwand 60 liegt um den Abstand a höher als die horizontale Bohrungsoberkante der beiden Anschlußstutzen 26. Gemäß Figur 1 wird dadurch ein U-förmiger Zulaufkanal 94 gebildet, der wie ein Siphon wirkt und dafür sorgt, daß die Anschlußstutzen 26 immer mit Wasser gefüllt sind.

Figur 1 zeigt weiter, daß hinter der Überlaufwand 60 das Wasser durch den Überströmkanal 50 unter den Ventilkörper 62 des geöffneten Ventils strömt, das aufgrund der Abwärtsbewegung des Schwimmers 96 bei unzureichend gefüllter Batteriezelle 10 von seinem Ventilsitz 64 im Ventilzylinder 44 nach oben abgehoben ist. In dem Ventilzylinder 44 fließt das zugeführte Wasser über Zulauföffnungen 66 seitlich neben dem Schwimmer 96 nach unten in die Batteriezelle 10.

Die Zulauföffnungen 66 sind in eine im wesentlichen kreisförmige Bodenplatte 68 eingearbeitet, die gemäß Figur 7 über ein Scharniergelenk 70 einstückig mit dem Zylindergehäuse 42 ausgebildet ist. Bei der Montage der Füllvorrichtung 14 wird die Bodenplatte 68 aus der in Figur 7 gezeigten Stellung um das Scharniergelenk 70 nach oben geschwenkt, bis sie an der Unterseite des Innengehäuses 18 anliegt und dieses nach unten abschließt.

Von der Oberseite der Bodenplatte 68 steht eine Kippstütze 72 ab, auf der ein zweiarmiger Hebel 74 schwenkbar gelagert ist. Das kürzere Ende des Hebels 74 greift gelenkig in eine Ausnehmung des Schaftes 76 des hängend eingebauten Ventilkörpers 62 ein, während das freie Ende des längeren Armes des Hebels 74 gelenkig in eine Aussparung 78 eines Armes 80 eingreift, der waagrecht von der Schwimmerstange 82 absteht. Das Längenverhältnis der beiden Arme des Hebels 74 beträgt im Ausführungsbeispiel 1:2,4, so daß die Schwimmerkraft in eine entsprechend größere Schließkraft des Ventilkörpers 62 umgewandelt wird.

Vom freien Ende des Armes 80 erstreckt sich eine vertikale Stange 84 nach oben, die eine Anzeigescheibe 86 trägt, welche bei geschlossenem Ventil durch das Fenster 36 im Deckel 34 des Stopfengehäuses 16 sichtbar ist. Dieser Zustand ist in Figur 2 zu erkennen.

Von der Innenseite der Decke 58 des Führungszylinders 52 steht ein Führungszapfen 88 nach unten ab, der in das obere Ende der hohlen Schwimmerstange 82 eingreift. Der Führungszapfen 88 hat einen kreuzförmigen Querschnitt, so daß an seinen Längsseiten vier vertikale Ablaufschlitze 90 ausgebildet sind. Das untere Ende der Schwimmerstange 82 ist mit Schnappsitz in den Schwimmer 96 eingesetzt und hat über diesem seitliche Ablauföffnungen 92.

Die erläuterte, hohle Ausbildung der Schwimmerstange 82 und ihre teleskopische Führung auf dem Führungszapfen 88 hat den Vorteil, daß ständig eine ausreichende Wasserschmierung und Selbstreinigung von oft unvermeidlichen Schwebeteilchen und Schmutzpartikeln stattfindet. Im Einsatz der Füllvorrichtung 14 bewegt sich aufgrund des stets schwankenden Wasserspiegels der Schwimmer 96 ständig, so daß zwischen dem Führungszapfen 88 und der hohlen, aufgrund der Kapillarwirkung immer mit Destillat gefüllten Schwimmerstange 82 eine Pumpbewegung stattfindet, die einerseits eine Schmierung bewirkt und andererseits dafür sorgt, daß in die hohle Schwimmerstange 82 eingedrungene Partikel nach unten gedrückt und über die Ablauföffnungen 92 abgestoßen werden.

Aus der Beschreibung des Ausführungsbeispiels ergibt sich, daß auf einem sehr kleinen Raum eine äußerst effektvolle Technik mit wenigen Einzelteilen untergebracht ist.

## Patentansprüche

1. Vorrichtung zum automatischen Einfüllen von Wasser in Batteriezellen mit einem in die Zelle einsetzbaren Füllstopfen, der einen Anschlußstutzen für die Wasserzufuhr sowie ein von einem Schwimmer betätigtes Ventil aufweist, dessen Ventilkörper über einen schwenkbar gelagerten Hebel mit dem zentrisch im Stopfengehäuse angeordneten Schwimmer gelenkig verbunden ist, **dadurch gekennzeichnet,** daß zwischen dem Ventil mit hängendem Ventilkörper (62) und dem Anschlußstutzen (26) eine i. w. vertikale Überlaufwand (60) angeordnet ist, deren freie Oberkante höher liegt als die horizontale Bohrungsoberkante des Anschlußstutzens (26) , von dem ein U-förmiger Zulaufkanal (94) zu der Überlaufwand (60) führt.

2. Vorrichtung nach Anspruch 1, **dadurch gekennzeichnet,** daß der vom Anschlußstutzen (26) ausgehende, vertikale U-Schenkel ein an seiner Unterseite geschlossener Zylinder (46) ist, von dem ein seitlicher Verbindungskanal (48) in ein dazu paralleles Zylindergehäuse (42) mündet, in dessen oberem Bereich die Überlaufwand (60) ausgebildet ist.

3. Vorrichtung nach Anspruch 2, **dadurch gekennzeichnet,** daß von dem oberen Bereich des Zylindergehäuses (42) seitlich ein Überströmkanal (50) in einen zum Zylindergehäuse (42) parallelen Ventilzylinder (44) führt, in dem der Ventilsitz (64) für den hängenden Ventilkörper (62) ausgebildet ist.

4. Vorrichtung nach Anspruch 3, **dadurch gekennzeichnet,** daß der Boden des Ventilzylinders (44) Zulauföffnungen (66) hat, die seitlich neben dem Schwimmer (96) in die Batteriezelle führen.

5. Vorrichtung nach einem der Ansprüche 1 bis 4, **dadurch gekennzeichnet,** daß das nach unten weisende Ende des Schaftes (76) des Ventilkörpers (62) mit der zentrischen Schwimmerstange (82) über den als Verstärkungshebel ausgebildeten Hebel (74) gelenkig verbunden ist, der auf einer Kippstütze (72) schwenkbar gelagert ist.

6. Vorrichtung nach den Ansprüchen 4 und 5, **dadurch gekennzeichnet**, daß die Kippstütze (72) und die Zulauföffnungenen (66) an einer i. w. kreisförmigen Bodenplatte (68) ausgebildet sind, die über ein Scharniergelenk (70) einstückig mit dem Zylindergehäuse (42) verbunden ist, das mit dem Ventilzylinder (44) und dem den Zulaufkanal (94) aufnehmenden Zylinder (46) als einstückiges Spritzguß-Innengehäuse (18) ausgebildet ist.

7. Vorrichtung nach Anspruch 5 oder 6, **dadurch gekennzeichnet,** daß das längere Ende des Hebels (74) gelenkig mit einem von der Schwimmerstange (82) waagrecht abstehenden Arm (80) verbunden ist, von dessen freiem Ende eine vertikale Stange (84) nach oben absteht, die eine Anzeigescheibe (86) trägt, die bei geschlossenem Ventil durch ein Fenster (36) in einem Deckel (34) im Stopfengehäuse (16) sichtbar ist.

8. Vorrichtung nach einem der Ansprüche 5 bis 7**, dadurch gekennzeichnet,** daß die Schwimmerstange (82) hohl ausgebildet ist und mit ihrem oberen Ende in einen oben geschlossenen Führungszylinder (52) eingreift, der in dem zentrischen Zylindergehäuse (42) ausgebildet ist und von dessen Decke (58) ein Führungszapfen (88) nach unten absteht, der in das obere Ende der hohlen Schwimmerstange (82) eingreift.

9. Vorrichtung nach Anspruch 8, **dadurch gekennzeichnet,** daß der Führungszapfen (88) einen kreuzförmigen Querschnitt hat derart, daß an seinen Längsseiten vertikale Ablaufschlitze (90) ausgebildet sind.

10. Vorrichtung nach Anspruch 8 oder 9, **dadurch gekennzeichnet,** daß das untere Ende der Schwimmerstange (82) mit Schnappsitz in den Schwimmer (96) eingreift und über diesem eine seitliche Ablauföffnung (92) aufweist.

11. Vorrichtung nach einem der vorhergehenden Ansprüche, **dadurch gekennzeichnet,** daß in den den Zulaufkanal (94) aufnehmenden Zylinder (46) ein zum Anschlußstutzen (26) führender, vertikaler Verbindungsstutzen (28) eingreift, der einstückig mit dem Stopfengehäuse (16) ausgebildet ist, von dessen horizontaler Oberseite (30), an der der Deckel (34) angelenkt ist, in die Batteriezelle (10) einsetzbare, radial federnde Seitenwände (38) nach unten abstehen.

12. Vorrichtung nach Anspruch 11, **dadurch gekennzeichnet,** daß am Stopfengehäuse (16) zwei Anschlußstutzen (24) ausgebildet sind, deren Achsen einen stumpfen Winkel bilden.

13. Vorrichtung nach Anspruch 11 oder 12, **dadurch gekennzeichnet,** daß das Spritzguß-Innengehäuse (18) mit Schnappeingriff zwischen die Seitenwände (38) des Stopfengehäuses (16) eingesetzt ist.

## Claims

1. A device for automatically pouring water into battery cells by means of a filling stopper insertable into the cell, the filling stopper comprising a pipe connection for the water supply and a valve operated by a float, the valve body being connected in an articulated manner, via a pivotably mounted lever, to the float arranged centrally in the filling-stopper housing, characterised in that a substantially vertical overflow wall (60) is arranged between the valve with overhead valve body (62) and the pipe connection (26), the free upper edge of the overflow wall (60) being arranged higher than the horizontal upper bore edge of the pipe connection (26), from which a U-shaped feed channel (94) leads to the overflow wall (60).

2. A device according to claim 1, characterised in that the vertical U-arm extending from the pipe connection (26) is a cylinder (46) closed on its underside, a lateral connecting channel (48) extending from the cylinder (46) and opening into a parallel cylinder housing (42), in the upper region of which the overflow wall (60) is formed.

3. A device according to claim 2, characterised in that an overflow channel (50) leads laterally from the upper region of the cylinder housing (42) into a valve cylinder (44) parallel with the cylinder housing (42), the valve seat (64) for the overhead valve body (62) being formed in the valve cylinder (44).

4. A device according to claim 3, characterised in that the base of the valve cylinder (44) has inlet openings (66) leading into the battery cell laterally to the float (96).

5. A device according to any one of claims 1 to 4, characterised in that the downward-facing end of the shaft (76) of the valve body (62) is connected in an articulated manner to the central float rod (82) via the lever (74) formed as an amplifying lever and pivotably mounted on a tilting support (72).

6. A device according to claims 4 and 5, characterised in that the tilting support (72) and the inlet openings (66) are formed on a substantially circular base plate (68) integrally connected via a hinge joint (70) to the cylinder housing (42) which, together with the valve cylinder (44) and the cylinder (46) containing the feed channel (94), is formed as a one-piece injection-moulded inner housing (18).

7. A device according to claim 5 or 6, characterised in that the longer end of the lever (74) is connected in an articulated manner to an arm (80) projecting horizontally from the float rod (82), a vertical rod (84) projecting upwards from the free end of the arm (80) and carrying an indicator disc (86) visible through a window (36) in a cover (34) in the filling-stopper housing (16) when the valve is closed.

8. A device according to any one of claims 5 to 7, characterised in that the float rod (82) is hollow and engages at its upper end in an upwardly closed guide cylinder (52) formed in a central cylinder housing (42), a guide pin (88) projecting downwards from the top (58) of the guide cylinder (52) and engaging in the upper end of the hollow float rod (82).

9. A device according to claim 8, characterised in that the guide pin (88) has a cross-shaped cross-section such that vertical discharge slots (90) are formed on its longitudinal sides.

10. A device according to claim 8 or 9, characterised in that the lower end of the float rod (82) engages in the float (96) with a snap fit and has a lateral discharge opening (92) above the said float (96).

11. A device according to any one of the preceding claims, characterised in that a vertical connecting piece (28) leading to the pipe connection (26) engages in the cylinder (46) containing the feed channel (94) and is formed in one piece with the filling-stopper housing (16), radially resilient sidewalls (38), insertable into the battery cell (10), projecting downwards from the horizontal upper surface (30) of the filling-stopper housing (16), the cover (34) being articulated on the said upper surface (30).

12. A device according to claim 11, characterised in that two pipe connections (24), the axes of which form an obtuse angle, are formed on the filling-stopper housing (16).

13. A device according to claim 11 or 12, characterised in that the injection-moulded inner housing (18) is inserted with snap engagement between the sidewalls (38) of the filling-stopper housing (16).

## Revendications

1. Dispositif pour le remplissage automatique d'éléments de batterie avec de l'eau à l'aide d'un bouchon de remplissage insérable dans l'élément, présentant un raccord pour l'amenée d'eau ainsi qu'une vanne actionnée par un flotteur, vanne dont le corps est relié de façon articulée par un levier pivotant au flotteur centré dans le corps du bouchon, caractérisé en ce qu'il existe entre la vanne avec son corps suspendu (62) et le raccord (26) une paroi de débordement (60) généralement verticale dont le bord supérieur libre se situe au-dessus du bord supérieur horizontal de perçage du raccord (26) d'où un canal d'amenée (94) en forme de U mène vers la paroi de débordement (60).

2. Dispositif selon la revendication 1, caractérisé en ce que le côté en U vertical partant du raccord (26) est un cylindre (46) fermé sur son côté inférieur d'où un canal de liaison latéral (48) mène vers un corps cylindrique (42) parallèle à ce dernier et dont la partie supérieure forme la paroi de débordement (60).

3. Dispositif selon la revendication 2, caractérisé en ce qu'un canai de débordement (50) part sur le côté depuis la partie supérieure du corps cylindrique (42) vers un cylindre de vanne (44) parallèle au corps cylindrique (42) et dans lequel est formé le siège de vanne (64) pour le corps de vanne (62) suspendu.

4. Dispositif selon la revendication 3, caractérisé en ce que le fond du cylindre de vanne (44) présente des ouvertures d'entrée (66) conduisant dans l'élément de batterie à côté du flotteur (96).

5. Dispositif selon l'une des revendications 1 à 4, caractérisé en ce que l'extrémité inférieure de la tige (76) du corps de vanne (62) est reliée de façon articulée à la tige du flotteur centrée (82) par le levier (74) conformé comme un levier amplificateur qui repose de façon orientable sur un support de basculement (72).

6. Dispositif selon les revendications 4 et 5, caractérisé en ce que le support de basculement (72) et les ouvertures d'entrée (66) sont formés sur une plaque de base (68) généralement circulaire qui est reliée par une charnière (70) de façon solidaire au corps cylindrique (42) qui forme un corps intérieur (18) monopièce moulé par injection avec le cylindre de vanne (44) et le cylindre (46) recevant le canal d'amenée (94).

7. Dispositif selon la revendication 5 ou 6, caractérisé en ce que l'extrémité plus longue du levier (74) est reliée de façon articulée à un bras (80) perpendiculaire par rapport à la tige du flotteur (82) et de l'extrémité libre duquel part vers le haut une tige verticale (84) qui porte un disque de signalisation (86) visible à travers une fenêtre (36) dans un couvercle (34) du corps de bouchon (16) quand la vanne est fermée.

8. Dispositif selon l'une des revendications 5 à 7, caractérisé en ce que la tige du flotteur (82) est creuse et s'engage selon son extrémité supérieure dans un cylindre de guidage (52) fermé en haut qui est formé dans le corps cylindrique (42) centré et du plafond (58) duquel une tige de guidage (88) dépasse vers le bas et s'engage dans l'extrémité supérieure de la tige du flotteur creuse (82).

9. Dispositif selon la revendication 8, caractérisé en ce que la tige de guidage (88) présente une section cruciforme, de sorte qu'elle présente des fentes d'écoulement verticales (90) sur ses grands côtés.

10. Dispositif selon la revendication 8 ou 9, caractérisé en ce que l'extrémité inférieure de la tige du flotteur (82) s'engage dans le flotteur (96) avec un encliquetage et présente au-dessus du flotteur une ouverture d'écoulement latérale (92).

11. Dispositif selon l'une des revendications précédentes, caractérisé en ce que dans le cylindre (46) recevant le canal d'amenée (94) s'engage une tubulure de raccord verticale (28) menant vers le raccord (26), tubulure qui est solidaire du corps de bouchon (16) d'où partent vers le bas, depuis sa partie supérieure horizontale (30) sur laquelle est articulé le couvercle (34), des parois latérales (38) à débattement radial insérables dans l'élément de batterie (10).

12. Dispositif selon la revendication 11, caractérisé en ce que sur le corps de bouchon (16) sont formés deux raccords (24) dont les axes forment un angle obtus.

13. Dispositif selon les revendications 11 ou 12, caractérisé en ce que le corps intérieur moulé par injection (18) est mis en place par engagement à encliquetage entre les parois latérales (38) du corps de bouchon (16).
